(19) Europäisches Patentamt

European Patent Office

Office européen des brevets

(11) EP 1 467 514 B1

(12) **EUROPEAN PATENT SPECIFICATION**

(45) Date of publication and mention
of the grant of the patent:
**14.06.2006 Bulletin 2006/24**

(51) Int Cl.:
***H04L 9/00*** (2006.01)

(21) Application number: **04101145.3**

(22) Date of filing: **19.03.2004**

(54) **Encryption process employing modified chaotic maps and relative digital signature process**

Verschlüsselungsverfahren mit Verwendung chaotischer Abbildungen und verwandtes digitales
Signaturverfahren

Procédé de cryptage employant des transformations chaotiques et procédé de signature digitale
correspondant

(84) Designated Contracting States:
**DE FR GB IT**

(30) Priority: **07.04.2003 EP 34252197**

(43) Date of publication of application:
**13.10.2004 Bulletin 2004/42**

(73) Proprietor: **STMicroelectronics S.r.l.**
**20041 Agrate Brianza (Milano) (IT)**

(72) Inventors:
 • **Kocarev, Ljupco**
 **92122, San Diego (US)**
 • **Amato, Paolo**
 **80020, Arzano (IT)**
 • **Rizzotto, Gianguido**
 **23862, Civate (IT)**

(74) Representative: **Pellegri, Alberto et al**
**c/o Società Italiana Brevetti S.p.A.**
**Piazza Repubblica, 5**
**21100 Varese (IT)**

(56) References cited:
**WO-A-98/36523**

 • **SHAMIR A: "On the power of commutativity in
 cryptography" AUTOMATA, LANGUAGES AND
 PROGRAMMING. INTERNATIONAL
 COLLOQUIUM PROCEEDINGS, XX, XX, 14 July
 1980 (1980-07-14), pages 582-595, XP002116401**
 • **PAPADIMITRIOU S ET AL: "Secure
 communication protocols with discrete nonlinear
 chaotic maps" JOURNAL OF SYSTEMS
 ARCHITECTURE, ELSEVIER SCIENCE
 PUBLISHERS BV., AMSTERDAM, NL, vol. 47, no.
 1, January 2001 (2001-01), pages 61-72,
 XP004221484 ISSN: 1383-7621**

**Description**

FIELD OF THE INVENTION

The present invention relates to data encryption and in particular to an encryption process that uses modified chaotic maps and to related digital signature processes.

BACKGROUND OF THE INVENTION

The pioneering work on chaos synchronization [1] led to several applications in communication, in which chaotic systems with continuous-value signals were used to transmit information. Several schemes have been developed which allow to transform the information signal into a chaotic waveform on the transmitter side and to extract the information signal from the transmitted waveform on the receiver side. The most important among them are: chaotic masking, chaos shift keying and chaotic modulation. In early days (from 1992 to 1996) the main research goal was to develop schemes in which a single chaotic system is used for both modulation and encryption. This approach eventually evolved into two distinct research areas: chaos-based modulation [2, 3] and chaos-based cryptography [4, 5].

In chaotic modulation, the digital information is mapped to inherently wide-band chaotic signals. Thus, chaotic modulation offers a novel solution to spread-spectrum communication. Two most promising approaches in chaos-based modulation have recently emerged. In the first approach, the unmodulated chaotic waveform is transmitted along with the modulated signal (transmitted reference scheme) either using a separate channel or using time division. One instance of this approach, so-called frequency-modulated differential chaos shift keying was particularly in-depth studied by Kolumban and Kennedy [2, 6]. In another approach, a chaotic reference is regenerated at the receiver with the help of synchronization. In Ref. [3, 7] an example of such approach is proposed, in which chaotic time pulsed sequences are used instead of continuous time waveform. Since the information about the state of the chaotic signal is contained entirely in the timing between pulses, the distortions that affect the pulse shape will not significantly influence the ability of the chaotic pulse generators to synchronize.

This approach is known as chaotic pulse position modulation.

Cryptography is generally acknowledged as the best method of data protection against passive and active fraud [8]. An overview of recent developments in the design of conventional encryption algorithms is given in [8]. The article by A. Shamir "On the power of commutativity in cryptography", Automata, Languages and Programming, International Colloquium Proceedings, 14 July 1980, pages 582-595, teaches how to apply commutative diagrams for describing encryption algorithms. Three most common encryption objects are: block-encryption algorithms (private-key algorithms), pseudo-random number generators (additive stream ciphers) and public-key algorithms.

Block ciphers transform a relatively short string (typically 64, 128 or 256 bits) to a string of the same length under control of a secret key. Several block encryption ciphers based on chaotic maps have been proposed in literature, in which a discretization (process that describes the way a chaotic map is implemented in the computer) is not realized by rounding the chaotic map according to the computer arithmetic, but rather is constructed explicitly. Pichler and Scharinger [9] proposed cryptographic systems based on chaotic permutations constructec by explicitly discretizing the two dimensional bakers map. Ridrich [10] extended their ideas to chaotic permutations on any size of two dimensional lattices. Her permutations benefit from the expanding property along one axis, technically avoiding the contracting property along the other axis. Masuda and Aihara [11] considered a discrete version of the skew-tent map, which exploits important chaotic properties such as the sensitive dependence on initial conditions and the exponential information decay. They discussed the difference between the discretized map and the original map, explaining the ergodic-like and chaotic-like properties of the discretized map.

A pseudo-random number generator is a deterministic method, usually described with a mapping, to produce from a small set of "random" numbers, called the seed, a larger set of random-looking numbers called pseudo-random numbers. Chaotic systems may be used to generate pseudo-random numbers. For example, in a series of papers [12], the authors proposed a chaos derived pseudo-random number generator. They numerically observed that the average cycle and transient lengths grow exponentially with the precision of implementation, and from this fact deduced that using high-precision arithmetic one can obtain PRNGs which are still of cryptographic interest. Statistical properties of binary sequences generated by class of ergodic maps with some symmetrical properties are discussed in [13]. The authors derived a sufficient condition for this class of maps to produce a sequence if independent and identically distributed binary random variables. However, the authors did not discuss the implementation of these maps on finite-state machines and the consequence this implementation may have on the randomness of the generated sequences.

Certain applications in cryptography require the use of a truly random number generator (RNG), which is a device which outputs a sequence of statistically independent and unbiased numbers. It is widely accepted that the core of any RNG must be an intrinsically random physical process. Thus, it is no surprise that the proposals and implementations of RNGs range from tossing a coin, to measuring thermal noise from a resistor and shot noise from a Zener diode or a vacuum tube, measuring radioactive decay from a radioactive source, and sampling a stable high-frequency oscillator with an unstable low-frequency clock, to mention only a few proposals. For chaos-based generators of truly random numbers see for example [14, 15].

Several applications [16, 17, 18] of chaos in cryptography have been proposed: the work presented in [16, 17, 18] ushers in the era of *scientific chaos-based cryptography,* which will trigger more research and real-world applications of chaos-based data protection.

In the work [16] a method for generating truly random numbers has been designed and implemented in CMOS technology. Random numbers are or crucial importance in every encryption and data protection application. Block encryption algorithm based on chaotic maps are proposed in the patent application "Chaos-based data protection using time-discrete dynamical systems" by L. Kocarev, G. Jakimoski, G. G. Rizzotto, and P. Amato [17]. Lower bounds of number of active S-boxes as well as the upper bounds for differential and linear probabilities in the proposed algorithm have been derived analytically, and therefore, the resistance of this algorithm to differential and linear attacks has been proved. L. Kocarev, P. Amato, and G. G. Rizzotto in [18] have presented a class of pseudo-random-bit generators, for which security does not rely on a number-theoretical problem, and therefore, does not use modular multiplications. In contrast, its security relies on the large numbers of branches the inverse of a function used in the algorithm has. The generators use only binary operations and have been efficiently implement on software.

The article *Communication Theory of Secrecy Systems* [22] by C. E. Shannon, published in 1949, ushered in the era of *scientific secret-key cryptography.* However, Shannon's article did not lead to an explosion of researches on cryptography comparable to that triggered by his earlier articles published in 1948 in information theory [23]. The real explosion of works on cryptography came with an article by W. Diffie and M. E. Hellman [24]. Diffie and Hellman showed for the first time that a secret communication was possible without any transfer of a secret key between sender and recipient, thus starting the era of *public-key cryptography.* Moreover, they suggested that computational complexity theory could be used for future research in cryptography.

Substantially, an encryption process is a process for transmitting data in a mode that ensures that the data remain private, by converting a message, referred to as a "plain-text", into an encrypted format, referred to as a "cipher-text". A sender encrypts the message by using an encryption key, while the recipient of the message recovers the plain-text from the received cipher-text by using a decryption key.

Public-key encryption algorithms, also called asymmetric algorithms, are designed so that

    (i) the encryption key is different from the decryption key,
    (ii) the encryption key can be made public, and
    (iii) the decryption key cannot, at least in a reasonable amount of time, be calculated from the encryption key.

There are many public-key algorithms: only few of them are both secure and practical, and only three of them work well for both encryption and digital signature: RSA, ElGamal, and Rabin [8].

In a public-key encryption system [8] each entity $A$ has a *public key "e"* and a corresponding *private key "d".* In secure systems, the task of calculating the private key "d" from the public key *"e"* is practically impossible.

The public key defines an encryption transformation $E_e$, while the private key defines the associated decryption transformation $D_d$.

A sender $B$ wishing to send a message $M$ to a recipient $A$ must obtain an authentic copy of the recipient public key "e", use the encryption transformation to obtain the cypher-text $c = E_e(M)$, and transmit the encrypted message "$c$" to the recipient $A$. The recipient $A$ decrypts the cipher-text "$c$" using the decryption transformation and obtains the plain-text $M = D_d(c)$.

Since 1976, numerous public-key algorithms have been proposed. Three most widely used public-key encryption processes are: RSA, Rabin and ElGamal.

The security of the RSA process is based on the intractability of the integer factorization problem.

In the Rabin public-key encryption process, the problem faced by a passive adversary is computationally equivalent to factorizing a number.

The security of the ElGamal public-key encryption process is based on the intractability of the discrete-logarithm problem.

Recall first the basic ElGamal algorithm. The ElGamal public-key algorithm can be viewed as Diffie-Hellman key agreement in key transfer-mode [8]. Consider a class of functions defined as $\pi_p(x) = x^p(\text{mod } N)$ wherein $N$ is a prime number, $x$ is a generator of the multiplicative group $Z^*_N$, and $1 \leq p \leq N - 2$.

Any two functions $\pi_p$ and $\pi_q$, commute under composition:

$$\pi_p\big(\pi_q(x)\big) = \pi_{pq}(x)$$

The Diffie-Hellman key agreement protocol describes how Alice and Bob agree on their common secret key. Alice generates a number $p$, computes $y = \pi_p(x)$ and sends $(x, y)$ to Bob. Bob creates a number $q$, computes $z = \pi_q(x)$ and sends $z$ to Alice. The secret key, which can be shared by both Alice and Bob, is computed as follows. Alice computes the secret key $k$ as $k = \pi_p(z)$, Bob computes the secret key $k$ as $k = \pi_q(y)$.

In the ElGamal public-key scheme, Alice generates a large random prime $N$ and a generator $x$ of the multiplicative group $Z^*_N$ of integers modulo $N$. She also generates a random integer $s \le N$ - 2 and computes $A = x^s$ (mod $N$). Alice's public key is $(x, N, A)$; Alice's private key is $s$. To encrypt a message $m$, Bob selects a random integer $r \le N$ - 2, computes $B = x^r$ (mod $N$) and $X = mA^r$ (mod $N$), and sends the cipher-text $c = (B, X)$ to Alice. To recover the message $m$ from $c$, Alice uses the private key $s$ to recover $m$ by computing $m = B^{-s}X$ (mod $N$). The decryption allows recovery of the original message because $B^{-s}mA^r \equiv x^{-rs}\,mx^{rs} \equiv m$ (mod $N$).

Recall now the RSA algorithm. Let $N = pq$ and $\varphi = (p$ - 1$) \cdot (q$ - 1$)$, where $p$ and $q$ are two large random (and distinct) primes $p$ and $q$. Alice selects a random integer $e$, $1 < e < \varphi$, such that the greatest common divisor of "$e$" and "$\varphi$" is 1:

$$\gcd(e,\phi) = 1$$

and computes the unique integer $d$, $1 < d < \varphi$, such that $ed \equiv 1$ (mod $\varphi$).

Alice's public key is $(N, c)$; Alice's private key is $d$.

To encrypt a message $m$, Bob computes $c = m^e$ (mod $N$) and send it to Alice. To recover the message $m$ from $c$, Alice should use the private key $d$ to recover $m = c^e$ (mod $N$).

Let $\pi_p(x) = x^p$ (mod $N$). The decryption in the RSA algorithm works for two reasons: the functions $\pi_e$ and $\pi_d$ commute under composition, and $p$ is a periodic point of the function $\pi_{ed}$ for every $m$ such that

$$m^{ed} \equiv m(\mathrm{mod}\,N)$$

The last follows from the following observation. Since $ed \equiv 1$ (mod $\varphi$), there is an integer $k$ such that $ed = 1 + k\varphi$. If $\gcd(m, p) = 1$ then by Fermat's theorem $m^{p-1} \equiv 1$ (mod $p$). Raising both sides of this congruence to the power of $k \cdot (q$ - 1$)$ and then multiplying both sides by $m$ yields $m^{ed} \equiv m$ (mod $p$).

By the same argument it is possible to demonstrate that $m^{ed} \equiv m$ (mod $q$). Finally, since $p$ and $q$ are distinct primes, thus

$$m^{ed} \equiv m(\mathrm{mod}\,N).$$

Public-key encryption processes are much slower than symmetric-key encryption algorithms. For this reason, public-key encryption is most commonly used in practice for encrypting short data and/or for transporting encryption keys, subsequently used for data encryption by symmetric-key algorithms.

Encryption processes based on the use of chaotic maps, that are composite functions $f\big(p\big(f^{-1}(.)\big)\big)$ generated by composing a first function $f(.)$, a second function $p(.)$ and the inverse of the first function $f^1(.)$, are disclosed in [19].

The functions $f(.)$ and $p(.)$ are defined on a phase space $PS$, that is they are defined on a certain domain and their images are in the same domain:

$$f(.) : PS \to PS\,; \qquad p(.) : PS \to PS\,.$$

The phase space $PS$ can be any domain and must be the same for functions $f(.)$ and $p(.)$.

The gist of these encryption processes consists in encrypting/decrypting messages by using permutable chaotic maps sharing the same first function $f(.)$, defining a secret key by using the second function $p(.)$. Chaotic maps may be used both in public-key encryption processes and in processes that contemplate only a secret key, and in relative digital signature processes.

In a public-key encryption process disclosed in [19], a recipient of a message chooses a second function $p_R$ (.) as public key, the inverse of which $p_R^{-1}(.)$ being hardly computable constitutes his private key. A sender of a message encrypts an encoded message $M$ by calculating the image thereof through the chaotic map using the public key of the recipient of the message $M$; finally the recipient decrypts the encrypted message by using his private key $p_R^{-1}(.)$.

A digital signature for a message encrypted according to the above process is generated as follows.

A sender encrypts a digital signature $SIG$, which is substantially a number representing a pre-established string or even a message $M$ to be sent, by calculating the image thereof through the chaotic map $f\!\left(p_S^{-1}\!\left(f^{-1}(.)\right)\right)$ using his own private key $p_S^{-1}(.)$, and encrypts a message $M$ together with the encrypted digital signature appended thereto by calculating the image of the combination of the message and the encrypted digital signature through the chaotic map $f\!\left(p_R\!\left(f^{-1}(.)\right)\right)$ using the recipient public-key $p_R(.)$.

A recipient decrypts the received encrypted message by calculating the image thereof through the chaotic map $f\!\left(p_R^{-1}\!\left(f^{-1}(.)\right)\right)$ using his own private key $p_R^{-1}(.)$, and obtains the digital signature $SIG$ decrypting the just decrypted message by calculating the image thereof through the chaotic map $f\!\left(p_S\!\left(f^{-1}(.)\right)\right)$ using the sender public key $p_S(.)$.

Encryption processes that use Chebyshev maps are both secure and practical and can be used for both encryption and digital signature. In the previous works [19, 20, 21] the E1Gamal public-key algorithm was extended to Chebyshev maps, defined on the set [-1, 1] and implemented using floating-point arithmetic.

Unfortunately these encryption processes require relatively a long time to perform each encryption/decryption operation.

SUMMARY OF THE INVENTION

It has been found an encryption process that is faster than the known encryption processes that use chaotic maps, while keeping all advantages of these processes.

The main drawback of processes that use chaotic maps consists in that they generally require floating-point arithmetic, and this slows down the execution of the encryption processes.

This problem has been solved by using a particular type of chaotic maps, hereinafter referred as "modified chaotic maps", that work only on integer numbers. Given that operations on integers are faster than operations in floating-point arithmetic, encryption processes are speeded up.

More precisely, this invention provides an encryption process that comprises the following steps:

- preliminarily choosing at least a secret key and a set of permutable functions defined on a certain phase space for encrypting/decrypting messages,
- choosing a code for encoding messages to be sent in the form of a number belonging to the phase space,
  and wherein the set of permutable functions is composed of modified chaotic maps generated by a composite function, the image of which is calculated modulo a certain pre-established integer number, obtained composing a first function, a second function and the inverse of said first function,
- the secret key is defined by using the second function.

The encryption process of this invention can be a symmetric-key or a public-key encryption process. According to this invention, it is possible to use modified chaotic maps in an ElGamal-like and RSA-like encryption processes and relative digital signature processes.

The processes according to this invention may be easily implemented by a software computer program.

The invention is defined in the annexed claims.

DESCRIPTION OF SEVERAL EMBODIMENTS OF THE INVENTION

This invention provides encryption processes using chaotic maps that work only on integer numbers. Such encryption processes could be even faster than the previously disclosed processes because they contemplate only operations on integer numbers, that are performed faster than operations on floating point numbers.

These encryption processes are implemented using particular chaotic maps, hereinafter referred as modified chaotic maps $f\left(p\left(f^{-1}(.)\right)\right)(\bmod N)$, generated by a composite function, the image of which is calculated modulo a certain pre-established integer number $N$, obtained composing a first function $f(.)$, a second function $p(.)$ and the inverse of said first function $f^1(.)$. Similarly to the encryption processes disclosed in [19], the secret key is defined by the second function $p(.)$.

In order to show that it is possible to realize encryption processes using modified chaotic maps, ElGamal-like and RSA-like public-key algorithms are proposed, but it is possible to use these maps also in any symmetric-key or public-key encryption process and relative digital signature processes that work on integer numbers.

Preferably, these modified chaotic maps are modified Chebyshev maps.

Furthermore, the analysis of the periodic orbits in sequences of integers generated by Chebyshev maps is based on the arithmetic properties of torus automorphisms, another well-known class of modified chaotic maps.

The encryption process of the invention may be implemented also using torus automorphisms as modified chaotic maps.

In order to explain more clearly how it is possible to use torus automorphisms in an encryption process of the invention, a brief introduction about torus automorphisms is given.

## Section 1: Torus automorphisms

In this section some general properties of automorphisms of the two-dimensional torus are briefly discussed. An automorphism of the two-torus is implemented by 2x2 matrix $M$ with integer entities and determinant $\pm 1$. The requirement that the matrix $M$ has integer entities ensures that $M$ maps torus into itself. The requirement that the determinant of the matrix $M$ is $\pm 1$ guarantees invertibility. Here only strictly unimodular automorphisms, for which det $M = 1$, are considered.

Let $M$ be a 2-torus automorphism

$$\begin{bmatrix} x' \\ y' \end{bmatrix} = M \begin{bmatrix} x \\ y \end{bmatrix} (\bmod 1)$$

where $x, y \in [0, 1]$. Let $k$ be a trace (which is an integer) of the automorphism $M$, $f(z) = z^2 - kz + 1$ its characteristic polynomial, and $\lambda$ one of its roots (for example the largest one):

$$\lambda = \frac{k + \sqrt{k^2 - 4}}{2}$$

It is well-known that for $k > 2$ (considering only positive $k$) that the automorphism $M$ has strong chaotic properties, and in particular, it has a dense set of unstable periodic orbits. The detail structure of periodic orbits of the 2-torus automorphisms has been studied by Percival and Vivaldi [26].

Periodic orbits of a torus automorphism consists of those points having rational coordinates $\xi = p_1/q_1$, $\eta = p_2/q_2$, $p_i$, $q_i$ integers. Let $p_i$, $q_i$ be co-primes (their greatest common divisor is 1) and $q$ be the least common multiple of $q_1$ and $q_2$. Clearing denominators, letting $M$ act on $Z^2$, the lattice of integral vectors, and then the periodicity of the torus is taken into account by identifying points whose coordinates differ multiplies of $q$, i.e., the factor group $Z^2/gZ^2$ is considered. Thus, the dynamics of periodic orbits is dynamics over a fmite set of integers.

The article [26] illustrates the close link existing between arithmetic in algebraic number fields and strongly chaotic dynamics. Main conclusions of Ref. [26] may be summarized as follows:

- A 2-torus automorphism has three different types of (periodic) orbit structure, according to the classification of rational primes: inert, split and ramified primes [27].

- The orbits which correspond to inert primes are almost without structure. The split primes have two distinct ideal factors, which correspond to orbits confined to invariant sublattices. For this reason, two ideal orbits which exist on split prime lattices are the "most ergodic" orbits, and thus, equilibrium averages computed with them minimize statistical fluctuations.

• Both inert and split prime lattices are found infinitely often, and moreover with the same frequency in both cases. These are consequences of Dirichelet's theorem on the existence of infinity many primes in any arithmetic progression [28].

• The ramified prime lattices support orbits which are exceptionally regular. However, there is only a finite number of ramified primes, so that this apparently contradictory phenomenon of regularity in chaos is in fact very rare.

**Section 2: Floating-point arithmetic versus integer arithmetic**

Chaotic systems are defined on real numbers. Any encryption algorithm which uses chaotic maps when implement on a computer (finite-state machine) becomes a transformation from a finite set onto itself. Because of its wide dynamic range, the floating-point implementation seems to be the most appropriate for software realizations (implementation) of Chebyshev polynomials.

However, there are three reasons for not using floating-point arithmetic in public-key encryption.

First, floating-point numbers are not uniformly distributed over any given interval of the real axis [29]. Furthermore, one may observe the existence of redundant number representations. Indeed, due to the normalized calculations in floating-point arithmetic, some floating-point numbers represent the same real signal value.

Second, non-invertibility of Chebyshev polynomials and their floating-point implementation imply a restriction on the length of the message. Indeed, the public-key encryption scheme proposed in [20, 21] and in this patent application can be viewed as a generalization of the ElGamal public-key process using Chebyshev polynomials.

The algorithm is summarized for sake of clarity. Alice generates a large integer $s$, selects a random number $x \in [-1,1]$ and computes $T_s(x)$. Alice's public key is $(x, T_s(x))$, while her private key is $s$. Bob represents the message as a number $M \in [-1,1]$, generates a large integer $r$ and computes $T_r(x)$, $T_{rs}(x) = T_r(T_s(x))$ and $X = MT_{rs}$. Bob sends the cipher-text $c = (T_r(x), X)$ to Alice. To recover plain-text $M$ from $c$, Alice uses the private *key s* to compute $T_{sr}(x) = T_s (T_r$

$(x))$, and recovers $M$ by computing $M = \dfrac{X}{T_{sr}}$. Let $l_s$, $l_r$, $l_M$ be the lengths (in bits) of $s, r,$ and $M$, respectively, and let

$N$-bit precision arithmetic is used in a software implementation of the algorithm: then $l_m \le N - l_s - l_r$ (see [20, 21]).

Third, the most important reason, there are no analytical tools for understanding the periodic structure of the periodic orbits in the floating-point implementation of chaotic maps (when implement on a computer all chaotic maps are periodic: all trajectories are eventually periodic). On the other hand, when using integers one may hope if a possible link between number theory and chaos theory has been established, as in the case of the torus automorphisms, to understand the structure of the orbits.

**Section 3: Modified Chebyshev polynomials**

In this section the following map is used

$$T_p : \{0, 1, \cdots, N-1\} \to \{0, 1, \cdots, N-1\}$$

defined as:

$$y = T_p(x)(\mathrm{mod}\, N) \qquad (1)$$

where $x$ and $N$ are integers and $T_p(x)$ is a Chebyshev map (see [19])

$$T_p(x) = \cos\left(p \cdot \cos^{-1}(x)\right) \qquad\qquad (2)$$

where $p$ = 2, 3, ..., to extend ElGamal and RSA public-key algorithms. The chaotic map (1) will be referred as a "modified Chebyshev polynomial".

The modified Chebyshev polynomials can replace powers in ElGamal and/or RSA public-key algorithms only if they commute under composition and one can compute the period of their orbits.

The following two theorems show properties of modified Chebyshev polynomials.

**Theorem 1.** *Modified Chebyshev polynomials commute under composition, that is:*

$$T_p\left(T_q(x)(\bmod N)\right)(\bmod N) = T_{pq}(x)(\bmod N)$$

**Theorem 2**. *Let N be an odd prime and $x \in Z$ such that $0 \le x < N$. Then the period of the sequence $T_n(x)$ (mod N), for n = 0, 1, 2 ... is a divisor of $N^2$ - 1.*

The first theorem can be easily verified; the proof of the second theorem is given in Section 9.

Sample trajectories of the map (1) for different values of the variable $x$ when $N$ = 19 are given below:

$x = 0$    1, 0, 18, 0, 1, 0, 18, 0, ...
$x = 1$    1, 1, 1, 1, ...
$x = 2$    1, 2, 7, 7, 2, 1, 2, 7, 7, 2, ...
$x = 3$    1, 3, 17, 4, 7, 0, 12, 15, 2, 16, 18, 16, 2, 15, 12, 0, 7, 4, 17, 3, ...
$x = 4$    1, 4, 12, 16, 2, 0, 17, 3, 7, 15, 18, 15, 7, 3, 17, 0, 2, 16, 12, 4, ...
$x = 5$    1, 5, 11, 10, 13, 6, 9, 8, 14, 18, 14, 8, 9, 6, 13, 10, 11, 5, ...

The periods of all trajectories of the map (1) with $N$ = 19 are listed in the following Table

**Tab. 1**

| x | 0 | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|----|----|----|----|----|----|----|----|----|
| Period | 4 | 1 | 5 | 20 | 20 | 18 | 18 | 5 | 18 | 3 | 6 | 9 | 10 | 9 | 9 | 20 | 20 | 10 | 2 |

These periods always divide the number 18 x 20 = $2^3 3^2 5$. One can easily show that for any odd prime $N$ the periods of the trajectories starting from initial points $x = 0$, $x = 1$, and $x = N - 1$ are always 4, 1, 2 respectively.

**Section 4: Software implementation**

In a public-key algorithm encryption, decryption, signing, and verifying signatures all involve multiplying with a large number. An algorithm for computing $T_p(x)(\bmod N)$ when $N$ and $p$ are large numbers is now presented.
The value of $T_s(x)$ may be calculated by using the following recursive relation between Chebyshev polynomials:

$$T_{p+1}(x) = 2x \cdot T_p(x) - T_{p-1}(x) \qquad (3)$$

with $T_0(x)=1$ and $T_1(x)=x$.
Equation (3) can be rewritten as

$$\begin{bmatrix} T_p \\ T_{p+1} \end{bmatrix} = \begin{bmatrix} 0 & 1 \\ -1 & 2x \end{bmatrix} \cdot \begin{bmatrix} T_{p-1} \\ T_p \end{bmatrix} = A \cdot \begin{bmatrix} T_{p-1} \\ T_p \end{bmatrix} \qquad (4)$$

or, after some algebra, as

$$\begin{bmatrix} T_p \\ T_{p+1} \end{bmatrix} = A^p \cdot \begin{bmatrix} T_0 \\ T_1 \end{bmatrix} \qquad (5)$$

Matrix exponentiation can be done effectively by the *square and multiply* algorithm. Using notation

$$I = \begin{bmatrix} 1 & 0 \\ 0 & 1 \end{bmatrix}$$

the algorithm in pseudo-C language for calculating the matrix exponent $A^P$ is:

$$A^P = I;$$
$$for\ (i = p.numBits();\ i > 0;\ i\text{--})$$
$$\{$$
$$A^P = (A^P)^2;$$
$$if\ (p.bitAt(i) == 1)$$
$$A^P = A^P A;$$
$$\}.$$

More in detail, an auxiliary matrix $A^p$ is preliminarily set equal to the identity matrix. The quantity *p.numBits()* is the number of bits of the binary string representing the number *p.* An iterative cycle begins: a pointer *"i"* is initially equal to *p.numBits()* and is decreased at each iteration step until it nullifies.

During each iteration step, the auxiliary matrix is powered to an exponent 2 and it is to be checked whether the *i*-th least (or most) significant bit of the binary string representing the number *p* equals 1 or not: if this condition is verified, the auxiliary array is multiplied by the matrix *A* and a successive iteration step is performed if *i*>0. When the iterative cycle ends, the auxiliary matrix is the exponent matrix to be calculated.

This algorithm is a version of the number exponentiation algorithm used in commercial asymmetric encryption algorithms, adapted to work on matrices.

The $T_p(x)(\text{mod } N)$ calculation speed has been tested on Intel Pentium 1700MHz processor with 512 MB RAM, using the equation (5). The test includes Java [30] and GNU Multiple Precision library [31] implementation. For *N* and *p* of order 1024 bits, calculating $T_p(x)(\text{mod } N)$ takes

*Java : ~ 700ms*

*Gamp : ~ 70ms.*

**Section 5: ElGamal-like public-key encryption with modified Chebyshev polynomials**

The ElGamal public-key encryption process can be viewed as Diffie-Hellman key agreement in key transfer-mode [8]. Its security is based on the intractability of the discrete logarithm-problem and the Diffie-Hellman problem. The basic ElGamal and generalized ElGamal encryption schemes are described in [8].

An encryption process of this invention is obtained by generalizing the ElGamal encryption scheme for using modified Chebyshev polynomials of Eq. (1).

The ElGamal-like public-key encryption process of this invention consists in an algorithm for key generation and an algorithm for encrypting/decrypting a message.

*Algorithm for key generation*

A recipient should perform the following operations:

1. Choosing a large random prime *N* and an integer *x* such that *x < N.*
2. Choosing a random integer *s < N* and computing $A = T_s(x)(\text{mod } N)$.
3. The recipient's public key is (*x, N, A*), while his private key is *s.*

*Algorithm for ElGamal-like public-key encryption*

*1. Encryption.* To encrypt a message *m*, a sender should perform the following operations:

(a) Obtaining the recipient's authentic public key (*x, N, A*).
(b) Encoding the message as an integer *m* in the range {0, 1, ..., *N* - 1}.
(c) Selecting a random integer *r < N.*
(d) Computing $B = T_r(x)(\text{mod } N)$ and $X = mT_r(A)(\text{mod } N)$.
(e) Sending the cipher-text *c* = (*B, X*) to Alice.

*2. Decryption.* To recover the message *m* from *c*, the recipient should perform the following operations:

(f) Using the private key *s* to compute $C = T_s(B)(\text{mod } N)$.
(g) Recovering *m* by computing $m = XC^{-1} (\text{mod } N)$.

*Proof that decryption works.* - It follows from the fact that

$$T_s(B) = T_s(T_r(x)) = T_r(T_s(x)) = T_r(A)$$

The just described encryption process may be easily generalized by choosing preliminarily an invertible parametric function $q_{par}(.)$ defined almost everywhere on the phase space (that is the set of eventual singular points of this parametric function does not have any accumulation point) in function of the parameter *par,* then encrypting a message performing the step (d) calculating the variable $X$ as follows:

$$X = q_{T_r(A)}(m)(\mathrm{mod}\ N)$$

The recipient recovers the message $m$ by performing the step (g) using the following formula:

$$m = q_{T_s(B)}^{-1}(X)(\mathrm{mod}\ N)$$

wherein $q_{par}^{-1}(.)$ is the inverse of the parametric function $q_{par}(.)$. The parametric function may be the product between the argument of the function by its parameter as in the embodiment presented above, or alternatively it may be the sum or the ratio between the argument of the function by its parameter, or any other invertible parametric function.

### Example

An example of application of the described encryption process with artificially small parameters is presented hereinbelow.

*Key generation.* Alice chooses the prime $N$ = 1749940627, integers $x$ = 25749480 and $s$ = 7207480595, and computes $A$ = 173359085. Alice's public key is ($N$ = 1749940627, $x$ = 25749480, $A$ = 173359085), while her private key is $s$ = 7207480595.

*Encryption.* To encrypt a message $m$ = 11223344, Bob chooses an integer $r$ = 6431562606 and computes $B$ = 1399079193 and $X$ = 878048528. He sends the cipher text $c$ = ($B$, $X$) = (1399079193, 878048528) to Alice.

*Decryption.* To recover the message $m$ from $c$, Alice computes $C$ = 1376040233 and $m$ = 11223344.

### Security

If $x$ > 1, the Chebyshev polynomial $T_n(x)$ can be written as

$$T_n(x) = \cosh(n \cosh^{-1}(x))$$

Thus, if $y = T_n(x)(\mathrm{mod}\ N)$, then, after some algebra, one finds

$$n = \log_{x+\sqrt{x^2-1}}\left(y + \sqrt{y^2-1}\right)$$

In the case where both square roots $\sqrt{x^2-1}$ and $\sqrt{y^2-1}$ exist in GF($N$), which is the Galois field of order $N$, one has a conventional discrete logarithm problem. On the other hand, if at least one of the square roots exists in the quadratic extension field GF($N^2$), this leads to a quadratic extension field generalization of the discrete logarithm problem. Thus, the modified ElGamal public-key algorithm of this invention is as secure as the original ElGamal algorithm.

### Section 6: RSA-like public-key encryption with modified Chebyshev polynomials

The RSA-like encryption process, named after its inventors R. Rivest, A. Shamir, and L. Adleman, is the most widely used public-key encryption process. It may be used to provide both secrecy and digital signatures and its security is based on the intractability of the integer factorization problem.

This section describes a RSA-like encryption process according to this invention for Chebyshev polynomials. As for the RSA encryption process, the encryption process presented hereinbelow can be used for both encryption and digital signature and its security is based on the intractability of the integer factorization problem.

The RSA-like public-key encryption process of this invention consists in an algorithm for key generation and an algorithm for encrypting/decrypting a message.

*Algorithm for key generation*

A recipient should perform the following operations:

1. Choosing two large random (and distinct) primes $p$ and $q$, roughly of the same size.
2. Computing $N = pq$ and $\phi = (p^2 - 1)(q^2 - 1)$.
3. Selecting a random integer $e$, $1 < e < \phi$, such that "$e$" and "$\phi$" are coprime integers, that is $\gcd(e, \phi) = 1$.
4. Computing the unique integer $d$, $1 < d < \phi$, such that $ed \equiv 1(\mathrm{mod}\,\phi)$.
5. The recipient's public key is $(N, e)$; the recipient's private key is $d$.

*Algorithm for encryption.*

*1. Encryption.* To encrypt a message $m$, a sender should perform the following operations:

(a) Obtaining the recipient's authentic public key $(N, e)$.
(b) Encoding the message in an integer in the interval $[1, N\text{-}1]$.
(c) Computing $c = T_e(m)(\mathrm{mod}\ N)$ according to Eq. (1) and sending it to the recipient.

*2. Decryption.* To recover the message $m$ from $c$, the recipient should perform the following operation:

(d) Using the private key $d$ to recover $m = T_d(c)(\mathrm{mod}\ N)$.

The integers $e$ and $d$ in RSA key generation are called the *encryption exponent* and the *decryption exponent,* respectively, while $N$ is called the *modulus.*

*Proof that decryption works.* - It was shown in Section 3 that if $p$ is an odd prime number and $0 \le g < p$, then the period of the sequence $T_n(g)(\mathrm{mod}\ p)$, $n = 0, 1, ...$ is a divisor of $p^2 - 1$. Since $ed \equiv 1(\mathrm{mod}\,\phi)$, there is an integer $k$ such that $ed = 1 + k\phi$. Thus, one finds

$$T_d\left(T_e(x)\right) \equiv T_{de}(x) \equiv T_{1+k\phi}(x) \equiv T_1(x) \equiv x(\mathrm{mod}\ p)$$

By the same arguments,

$$T_d\left(T_e(x)\right) \equiv T_{de}(x) \equiv T_{1+k\phi}(x) \equiv T_1(x) \equiv x(\mathrm{mod}\ q)$$

Finally, since $p$ and $q$ are distinct primes, it is possible to use Chinese remainder theorem to show that

$$T_d\left(T_e(x)\right) \equiv T_{de}(x) \equiv T_{1+k\phi}(x) \equiv T_1(x) \equiv x(\mathrm{mod}\ N)$$

**Example**

An example of application of this algorithm with artificially small parameters is presented hereinbelow.

*Key generation.* Alice chooses the primes $p = 21787$ and $q = 3793$ and computes $N = 82638091$ and $\phi = 6829053595064064$. Alice chooses $e = 65537$ and, using the extended Euclidean algorithm, finds $d = 2150406320724737$. Alice's public key is the pair $(N = 82638091, e = 65537)$, while her private key *is* $d = 2150406320724737$.

*Encryption.* To encrypt a message *m* = 11223344, Bob computes

$$c = T_{65537}(11223344)(\mathrm{mod}\,82638091) = 12355612$$

*Decryption.* To decrypt *c*, Alice computes

$$T_d(c)(\mathrm{mod}\,N) = T_{2150406320724737}(12355612)(\mathrm{mod}\,82638091) = 11223344$$

Like the well known RSA and ElGamal encryption processes, digital signature processes for both the RSA-like and the ElGamal-like encryption processes of this invention may be realized. For example the digital signature process for public-key encryption processes already disclosed in the introduction of this application and in [19] may be used.

**Section 7: Ideal theory in quadratic fields**

In this section the ideal theory in quadratic fields is briefly summarized following [27, 28].

*Quadratic integers* - The solutions of the linear equations with integral coefficient, *ax* + *b* = 0, form the field of rational numbers. If the leading coefficient is equal to 1, *a* = 1, the solutions are integers. Following Dedekind, quadratic irrationals are defined as the solutions of quadratic equations with integral coefficients, whereas quadratic equations whose leading coefficient is 1 yield *quadratic integers.* Thus $(1 + \sqrt{5})/2$ and 2*i* are quadratic integers, since they satisfy the equations $x^2 - x - 1 = 0$ and $x^2 + 4 = 0$, respectively. Quadratic integers coincide with the eigenvalues of 2 by 2 integral matrices. Sometimes, when possibility of confusion arises, ordinary integers will be called *rational* integers.

*Norm, units and primes* - By analogy with complex conjugates, the conjugate of a quadratic irrational $z = (a + b\sqrt{D})/c$ is defined as $z' = (a - b\sqrt{D})/c$. The number $zz' = N(z)$ is called *norm* of z. Then $N(z) = N(z')$ and $N(zv) = N(z)N(v)$. In real fields, the norm of the number has nothing to do with its actual magnitude, and can be even negative. The norm of a quadratic integer is a rational integer.

The divisors of all rational integers are just 1 and -1, which are called *units.* The units of a quadratic field are precisely those quadratic integers of the field having unit norm. In real fields there is an infinity of units, forming a cyclic multiplicative group. So every unit can be expressed as a power of the generator of the group, which is called the *fundamental unit.* For instance, the golden mean $(1 + \sqrt{5})/2$ and $2143295 + 221064\sqrt{94}$ are fundamental units in their respective fields.

A quadratic integer *z* that is not a unit is called a prime if a factorization *z* = *uv* is possible only when one of the two factors is a unit. For instance, $z = 2 + \sqrt{7}$ is a prime. Then one would hope that any integer can be factored in essentially only one way as product of primes. The richness and difficulty of the arithmetic of quadratic integers depends largely on the fact that unique factorization generally fails.

*Quadratic residues - The* values of *a* for which the congruence in *x*,

$$x^2 \equiv a(\mathrm{mod}\,p) \qquad\qquad (6)$$

is solvable are called *quadratic residues* of the odd prime *p*. The quadratic residue character is denoted by the Legendre symbol $\left(\frac{a}{p}\right)$ [also written (*a*/*p*)],

$$\left.\begin{array}{ll}\left(\tfrac{a}{p}\right)=1, & \text{if } x^2 \equiv a(\operatorname{mod} p)\,\text{solvable and } \gcd(a,p)=1 \\[4pt] \left(\tfrac{a}{p}\right)=0, & \text{if } \gcd(a,p)=p \\[4pt] \left(\tfrac{a}{p}\right)=-1, & \text{if } x^2 \equiv a(\operatorname{mod} p)\,\text{unsolvable}\end{array}\right\} \qquad (7)$$

Thus, [1 + (*a/p*)] is the number of solutions to the equation (6) for any a.

*Modules* - A *module* is defined as a set of quantities closed under addition and subtraction. Thus, when a module contains an element ξ, it contains 0 (= ξ - ξ) as well as negatives -ξ ( = 0 - ξ) and integral multiplies (ξ + ξ written as 2ξ, ξ + ξ + ξ written as 3ξ, etc). Capital letters *M, N, D,* etc., are used to denote modules. Combinations of a finite set of vectors $V_i$ is considered

$$u = x_1 V_1 + x_2 V_2 + \ldots + x_s V_s \qquad (8)$$

where the coefficients $x_i$ range over all integers. The set of those *u* forms a module *M* and the vectors $V_i$ are called a *basis* of the module, written

$$M = [V_1, V_2, \ldots, V_s]$$

*Field* - A field is a set of quantities taken from the complex numbers closed under the rational operations, namely addition, subtraction, multiplication, and division (excluding division by zero). In quadratic number theory, the considered field is taken to be the set of surds $\left(a + b\sqrt{D}\right)\!/c$ for *a, b, c* integral, *D* fixed and not a perfect square, and $c \neq 0$. It can be seen that addition, subtraction, multiplication, and division of such quantities lead to quantities of the same form. This field is written symbolically as $R\!\left(\sqrt{D}\right)$ meaning that the set of surds *is generated* by adjoining $\sqrt{D}$ to the rationals. The field $\sqrt{D}$ is called a field over rationals. From *D* is extracted its (positive or negative) square-free kernel $D_0$, so that $D = m^2 D_0$.

Note that $\sqrt{D}$ and $\sqrt{D_0}$ generate the same field. Let us define:

$$\omega_0 = \begin{cases} \sqrt{D_0}, & \text{if } D_0 \neq \operatorname{mod}(4) \\[6pt] \dfrac{1+\sqrt{D_0}}{2}, & \text{if } D_0 \equiv \operatorname{mod}(4) \end{cases} \qquad (9)$$

Thus, the basis of quadratic integers in $R\!\left(\sqrt{D}\right)$ is $[1, \omega_0]$. This module is designated by the symbol

$$D = [1, \omega_0]$$

For example, the basis of $R\left(\sqrt{2}\right)$ is $\left|1, \sqrt{2}\right|$, the basis of $R\left(\sqrt{5}\right)$ is $\left|1, \left(1 + \sqrt{5}\right)/2\right|$, while $R\left(\sqrt{8}\right)$ has the same basis as $R\left(\sqrt{2}\right)$. In general, the field $R\left(\sqrt{m^2 D_0}\right)$ is independent of $m$, and so $D$ and its basis.

The rational integer $d$, defined as

$$d = \begin{cases} D_0, & \text{if } D_0 \equiv \text{mod}(4) \\ 4D_0, & \text{if } D_0 \neq \text{mod}(4) \end{cases} \qquad (10)$$

is called a *field discriminant.* All numbers sharing the same discriminant $d$ form a field.

*Integral domain* - A set of quantities taken from complex numbers which is closed under addition, subtraction, and multiplication (ignoring division) is called a *ring.* If a ring contains the rational integers, it is called an *integral domain.* The quadratic integers of a fixed field $R\left(\sqrt{D_0}\right)$ form a domain which will be referred as $D$.

If the integral domain $D$ of all quadratic integers of $R\left(\sqrt{D}\right)$ contains an integral domain $D^*$ which does not consist wholly of rationals, then $D^*$ is characterized by some fixed positive rational integer $n$ as the set of integers of $D$ which are congruent to a rational integer modulo $n$. The integral domain $D^*$ corresponding to $n$ is written $D_n$. Thus $D_1 = D$. Note also that $D_n = [1, n\omega_0]$.

*Ideals* - Let us start with $D_n$, a quadratic integral domain. An *ideal A* in $D_n$ is defined as a module in $D_n$ with a special property that if $\alpha,\beta \in A$ and $\xi \in D_n$, then $\alpha \pm \beta \in A$ (property valid for modules), and $\alpha\xi \in A$ (property distinguishing ideals). Starting with $\alpha$, a fixed element of $D_n$, the *principal ideal* in $D_n$ is defined as follows

$$A = \left(\alpha\right)$$

as the set of $\alpha\xi$ where $\xi \in D_n$. The ideal (1) is called the *unit* ideal. The *sum* of ideals is defined as the ideal $A + B = \{\alpha + \beta\}$, where $\alpha \in A$ and $\beta \in B$. The *product* of two ideals $A$ and $B$ is defined as the ideal $C$ "generated by all products" $\alpha\beta$. Let us say *ideal A divides ideal C* in $D_n$ (or $A|C$) if and only if an ideal $B$ exists in $D_n$ for which $C = AB$.

An *indecomposable ideal* in $D_n$ is an ideal $Q$ in $D_n$ other than the unit ideal, which has no ideal in $D_n$ as divisor other than $Q$ and $D_n$. The integral domain $D_1$, has unique factorization into indecomposables if and only if all ideals are principals.

A *prime ideal* in $D_n$ is an ideal $P$ in $D_n$ other than the unit ideal, with the property that for any two ideals in $D_n$, $A$ and $B$, if $P|AB$, then $P|A$ or $P|B$. Every prime ideal P belongs to a rational prime $p$ determined uniquely by $P|(p)$.

The rational prime $p$ factors in the quadratic field $R\left(\sqrt{D}\right)$, ($D$ is a square-free integer), according to the following rules based on $d$, the discriminant of the field, and $(d/p)$, the Kronecker symbol:

$$\begin{aligned} (p) = (p) \qquad & \text{or } p \text{ is inert (does not factor) if and only if} \qquad \left(\tfrac{d}{p}\right) = -1 \\ (p) = P_1 P_2 \quad & \text{or } p \text{ splits into two different factors if and only if} \quad \left(\tfrac{d}{p}\right) = 1 \\ (p) = P^2 \qquad & \text{or } p \text{ ramifies if and only if} \qquad\qquad \left(\tfrac{d}{p}\right) = 0 \end{aligned} \right\} \qquad (11)$$

## Section 8: Dynamics and arithmetics

In this section arithmetic properties of torus automorphisms following [26] are briefly summarized. Consider the dynamics of the following map:

$$\begin{bmatrix} x_{n+1} \\ y_{n+1} \end{bmatrix} = \begin{bmatrix} 0 & 1 \\ -1 & k \end{bmatrix} \begin{bmatrix} x_n \\ y_n \end{bmatrix} (\text{mod } N) \qquad (12)$$

where x, y, k are integers and N is prime. Let us assume that $0 < x_0, y_0 < N$ and $2 < k < N$.

Let us consider a fixed value of the trace k, and let

$$\lambda = \frac{k + \sqrt{k^2 - 4}}{2}$$

be the eigenvalue of the matrix in the equation (12). This determines a integral domain $D_1$ to which the eigenvalue belongs. Let d be the filed discriminant, i.e. $d = D_0 \equiv (\text{mod} 4)$ or $d = 4D_0 \neq (\text{mod} 4)$, where $D_0$ is the square-free kernel of $k^2 - 4$.

Consider now the unit ideal in $D_1$ (i.e. $D_1$ itself): $D_1 = (1) = [1, \omega_0]$, where $\omega_0$ is given by equation (9). Multiplying this ideal by $\lambda$ the same ideal is obtained, but with different basis. Its elements are integral linear combinations of the basis elements 1 and $\omega_0$, given by the equation

$$\lambda [1, \omega_0] = [m_{11} + \omega_0 m_{21}, m_{12} + \omega_0 m_{22}]$$

where the numbers $m_{ij}$ are rearranged as a matrix:

$$M' = \begin{bmatrix} m_{11} & m_{21} \\ m_{12} & m_{22} \end{bmatrix} \qquad (13)$$

Since $\lambda$ is a unit of norm +1, the matrix M' is strictly unimodular (its determinant is equal to +1). Let us identify the point $(x, y) \in Z^2$ with $z = x + y\omega_0$, i.e. z is a quadratic integer in the ideal (1). From Eq. (13) one obtains

$$\lambda z = \lambda x + \lambda y \omega_0 = x' + y' \omega_0$$

One can see that multiplication by $\lambda$ corresponds to the action of the transpose M of M' on $Z^2$: M (x, y) = (x', y'). In constructing the matrix M from Eq. (13), the largest solution $\lambda$ of the equation $\lambda^2 - k\lambda + 1 = 0$ has been used. This choice is not restrictive, since the smallest solution $\lambda'$, which is conjugate to $\lambda$, would just correspond to the inverse matrix $M^{-1}$, as easily verified. Note also that one can derive an explicit expression for M. Let $k^2 - 4 = m^2 D_0$, and $D_0$ be a square-free kernel. Thus for k odd, M reads:

$$M = \begin{bmatrix} h & (h^2 + mh - 1)/m \\ m & h + m \end{bmatrix}$$

where $h = (k - m)/2$, while for k even, M reads:

$$M = \begin{bmatrix} h & (h^2 - 1)/m \\ m & h \end{bmatrix}$$

where $h = m/2$.

The properties of the orbits generated by $M$ are now determined for each value of $k$, a task which is greatly simplified by the choice of identifying $Z^2$ with the unit ideal in $D_1$. Then, one can determine the properties of the orbits generated by other 2 by 2 matrices with integer entries and determinant +1. It turns out, however, that the orbit structure depends to a great extent on the eigenvalue $\lambda$ alone, which depends only on one parameter, the trace $k$.

In order to take into account the periodicity of the torus, a "two-dimensional" modular arithmetic is used, identifying quadratic integers which differ by elements of the ideal $(N) = [N, N\omega_0]$. In other words, the points of square lattices with side $N$ are identified. To do so a generalization of the concept of congruence is needed, since if $z = x + y\omega_0$ both x and $y$ must be taken modulo $N$. Let us say that two quadratic integers $v$, $z$ are congruent module an ideal $A$, and write $v \equiv z(\text{mod } A)$, if $v - z$ is contained in $A$.

The period of an orbit through the point $(x, y)$ is given by the smallest integer $T$ satisfying the congruence

$$\lambda^T z \equiv (\text{mod}(N)), \qquad\qquad z = x + y\omega_0 .$$

Note that since $\lambda$ is a unit, $(\lambda)A = A$ for any ideal $A$; thus, $A$ is an invariant sublattice of $Z^2$. On the other hand, since one performs arithmetic modulo $(N)$, the only invariant ideals on the torus are divisors of $(N)$. To perform the ideal factorization of $(N)$ (if $N$ is an integer), its rational prime factors are first determined, $N = p_1 p_2 ... p_n$, where $p_i$ are rational primes. This corresponds to the ideal factorization $(N) = (p_1)(p_2)...(p_n)$. However, in the considered case $N$ is a prime number. Hereinafter, an orbit which belongs to some ideal factor of $(N)$ different from (1) is referred as an *ideal orbit,* otherwise it is referred as a *free orbit*. Hereinbelow results proved in [26] are stated.

1. If $(d/N) = -1$, $(N)$ is inert. All orbits are free and have the same period $T$, which is a divisor of $N + 1$. If $T = (N + 1)/m$, then there are $m(N - 1)$ free orbits.

2. If $(d/N) = -1$, $(N)$ splits. All orbits have the same period $T$, which is divides $N - 1$. If $T = (N - 1)/m$, then there are $m(N - 1)$ free orbits and 2m ideal orbits.

3. If $(d/N) = -1$, $(N)$ ramifies. The periods of orbits are computed as follows. Let $\lambda = \left(k + b\sqrt{D_0}\right)$ (with $k$ and $b$ both even if $D_0 \neq 1(\text{mod}4)$. Two cases are possible:

3a. If $k \equiv 2(\text{mod } N)$, there are $N - 1$ ideal fixed points, and $N - 1$ free orbits of period $N$.

3b. If $k \equiv -2(\text{mod } N)$, there are $(N - 1)/2$ ideal orbits of period 2, and $(N - 1)/2$ free orbits of period $2N$.

**Section 9: Proof of the theorem 2**

In this section a proof of the theorem 2 is given. Consider the following matrix:

$$C = \begin{bmatrix} 0 & 1 \\ -1 & 2g \end{bmatrix}$$

Its largest eigenvalue is $\lambda = g + \sqrt{g^2 - 1}$. Let $g^2 - 1 = m^2 D_0$, where $D_0$ is square free kernel. Let us define an integer $d$ as follows

$$d = \begin{cases} D_0, & \text{if } D_0 \equiv (\text{mod } 4), \\ 4D_0, & \text{if } D_0 \neq (\text{mod } 4). \end{cases}$$

The proof of the theorem 2 follows directly from the following theorem:

*Let N be an odd prime and $g \in Z$ such that $0 \leq g < N$. Let T be the period of the sequence $T_n$(g)(mod N), for n = 0,1, 2, ... :*

*(i) if $x^2 \equiv d$(mod N) is solvable, then T is a divisor of N - 1; otherwise,*
*(ii) if $x^2 \equiv d$(mod N) is unsolvable, then T is a divisor of N + 1.*

The proof of this theorem, however, follows from the results of the previous Section 8 if $g \geq 2$. Only the cases g = 0 and g = 1 must be considered. As mentioned in the Section 3 the periods of the trajectories starting from initial points g = 0 and g = 1 are always 4 and 1, respectively. Thus, for all odd primes N, the period of the sequence $T_n(g)$ (mod N), is a divisor of $N^2$ - 1.

## REFERENCES

[1] L.M. Pecora and T.L. Carroll, "Synchronization in chaotic system", Phys. Rev. Lett., Vol. 64, pp. 821 - 824, (1990).

[2] G. Kolumban, M. P. Kennedy, G. Kis, Z. Jako, "FM-DCSK: a novel method for chaotic communications", ISCAS '98. Proceedings of the 1998 IEEE International Symposium on Circuits and Systems, Volume: 4, Page(s): 477 -480, (1998).

[3] M. Sushchik, N. Rulkov, L. Larson, L. Tsimring, H. Abarbanel, K. Yao, A. Volkovskii, "Chaotic pulse position modulation: a robust method of communicating with chaos", IEEE Communications Letters, Volume: 4 Issue: 4, Page(s): 128 - 130, (2000).

[4] L. Kocarev, "Chaos-Based Cryptography: a Brief Overview," IEEE Circuits and Systems Magazine, Volume 1, Issue 3, pp. 6 - 21, (2001).

[5] F. Dachselt and W. Schwarz, "Chaos and cryptography", IEEE Transactions on Circuits and Systems I: Fundamental Theory and Applications, Volume: 48 Issue: 12, pp: 1498 - 1509, (2001).

[6] M. P. Kennedy, G. Kolumban, G. Kis, Z. Jako, "Performance evaluation of FM-DCSK modulation in multipath environments", IEEE Transactions on Circuits and Systems I: Fundamental Theory and Applications, Volume: 47 Issue: 12, Page(s): 1702 - 1711, (2000).

[7] N. F. Rulkov, M. M. Sushchik, L. S. Tsimring, and A. R. Volkovskii, "Digital Communication Uisng Chaotic Pulse Position Modulation", IEEE Transactions on Circuits and Systems I: Fundamental Theory and Applications, Volume: 48 Issue: 12, Page(s): 1436 - 1444, (2001).

[8] A. Menezes, P. van Oorschot, and S. Vanstone, *Handbook of Applied Cryptography,* CRC Press, 1997.

[9] F. Pichler and J. Scharinger, "Finite dimensional generalized Baker dynamical systems for cryptographic applications", Lect. Notes in Comput. Sci., vol. 1030, pp. 465 - 476, (1996).

[10] J. Fridrich, "Symmetric ciphers based on two-dimensional chaotic maps", Int. J. Bifurcation and Chaos, Volume 8, Issue 6, Pages: 1259 - 1284, (1998).

[11] N. Masuda and K. Aihara, "Cryptosystems with discretized chaotic maps", IEEE Transactions on Circuits and Systems I: Fundamental Theory and Applications, Volume: 49 Issue: 1, Pages: 28 - 40, (2002).

[12] R. A. J. Matthews, "On the Derivation of a 'Chaotic' Encryption Algorithm", *Cryptologia,* vol. 13, pp. 29 - 42, (1989); D. D. Wheeler, "Problems with Chaotic Cryptosystems", *Cryptologia,* vol. 13, pp. 243 - 250, (1989); D. D. Wheeler and R. A. J. Matthews, "Supercomputer Investigations of a Chaotic Encryption Algorithm", *Cryptologia,* vol. 15, no. 2, pp. 140 - 152, (1991).

[13] T. Kohda and A. Tsuneda, "Statistics of Chaotic Binary Sequences", IEEE Transactions on Information Theory, Volume: 43, Pages: 104 - 112, (1997).

[14] C. S. Petrie and J. A. Connelly, "A noise-based IC random number generator for applications in cryptography", IEEE Transactions on Circuits and Systems I: Fundamental Theory and Applications, Volume: 47 Issue: 5, Page (s): 615 - 621, (2000).

[15] A. Gerosa, R. Bernardini, and S. Pietri, "A fully integrated chaotic system for the generation of truly random numbers", IEEE Transactions on Circuits and Systems I: Fundamental Theory and Applications, Volume: 49 Issue: 7, Page(s): 993 - 1000, (2002).

[16] L. Kocarev, T. Stojanovski, G. G. Rizzotto, F. Italia and D. Porto, "Method for generating a random number sequence and a relative random bit generator," European Patent Application No. 01830764.5-1243 (EP 1 320 026), Date of filing: 13 December 2001.

[17] L. Kocarev, G. Jakimoski, G. G. Rizzotto, and P. Amato, "Chaos-based block encryption," European Patent Application No. 01130846.7-1525 (EP 1 326 363), Date of filing: 27 December 2001.

[18] L. Kocarev, P. Amato, and G. G. Rizzotto, " Method of generating a chaos-based pseudo-random sequence and a hardware generator of chaos-based pseudo random bit sequences" European Patent Application No. 02425689.3; Date of filing: 12 November 2002.

[19] L. Kocarev, Z. Tasev, P. Amato, and G. G. Rizzotto, "Encryption process employing chaotic maps and digital signal process," European Patent Application No. 03425219.7-1237; Date of filing: 7 April 2003.

[20] L. Kocarev and Z. Tasev, "Public-key encryption based on Chebyshev maps", 2003 IEEE International Symposium on Circuits and Systems, May 25 - May 28, 2003, Bangkok, Thailand, ISCAS 2003, accepted for publication.

[21] L. Kocarev, Z. Tasev, and J. Makraduli, "Public-Key Encryption and Digital-Signature Schemes Using Chaotic Maps", 16th European Conference on Circuits Theory and Design, September 1 - September 4, 2003, Krakow, Poland, ECCTD 2003, accepted for publication.

[22] C. E. Shannon, "Communication theory of secrecy systems", Bell Systems Technical Journal, vol. 28, pp. 656 - 715, (1949).

[23] C. E. Shannon, Bell Systems Technical Journal 27, 379 (1948); 27, 623 (1948).

[24] W. Diffie and M. E. Hellman, "New directions in cryptography", IEEE Trans. of Information Theory, Volume 22, pp. 644 - 654, (1976).

[25] T. J. Rivlin, *Chebyshev polynomials,* John Wiley and Sons, Inc., New York, 1990.

[26] I. Percival and F. Vivaldi, "Arithmetical properties of strongly chaotic motions", Physica D, vol. 25, no. 1 - 3, pp. 105 - 130, (1987).

[27] H. Cohn, *A second course in number theory,* John Wiley & Sons, Inc., New York, 1962.

[28] H. Hasse, *Number theory,* Springer-Verlag, Berlin, 2002.

[29] D. E. Knuth, *The Art of Computer Programming,* Reading, MA: Addison Wesley, 1998, vol. 2.

[30] http://java.sun.com

[31] www.swox.com/gmp/

[32] T. Kohda and H. Fujisaki, "Jacobian elliptic Chebyshev rational maps", Physica D **148**, 242 (2001).

[33] R.L. Devaney, "An Introduction to Chaotic Dynamical Systems", Benjamin/Cummings, New York, 1984.

**Claims**

1.  An encryption process comprising the steps of choosing preliminarily at least a secret key and a set of permutable functions defined on a certain phase space for encrypting/decrypting messages, choosing a code for encoding a message to be sent in the form of a number m belonging to said phase space, encrypting said message by applying one of said permutable functions to said number m, said set of permutable functions being composed of modified chaotic maps $f\left(p\left(f^{-1}(.)\right)\right)(\bmod N)$ generated by a composite function, the image of which is calculated modulo a certain pre-established integer number $N$, obtained composing a first function $f(.)$, a second function $p(.)$ and the inverse of said first function $f^{-1}(.)$, said secret key being defined by said second function $p(.)$.

2.  The encryption process of claim 1, further comprising the definition of a public key for encrypting messages to be sent.

3.  The encryption process of claim 1, wherein said modified chaotic maps are equivalent to respective torus automorphisms defined as modular iterative vector maps, in which an integer value of a state vector after a certain number of iteration steps is obtained by:

    calculating the dot product between the value of the state vector at the previous step and a certain matrix the determinant of which is $\pm 1$; and
    calculating the integer remainder of said dot product modulo said certain pre-established integer.

4.  The encryption process of claim 3, wherein the components of any space vector are comprised in the interval [0, 1], said pre-established integer is 1, and said certain matrix is an arbitrary 2x2 matrix with integer components.

5.  The encryption process of claim 3, wherein the components of any space vector are non-negative integer numbers smaller than said pre-established integer.

6.  The encryption process of claim 3, wherein said pre-established integer is a prime number, and said certain matrix is an arbitrary 2x2 matrix with integer components.

7.  The encryption process of claim 4, wherein the component of the first row of an initial state vector of said modular iterative vector map is 1, and the respective component of the second row is a number comprised in the interval [0, 1].

8.  The encryption process of claim 3, wherein said chaotic maps are modified Chebyshev polynomial maps $\cosh\left(p \cdot \cosh^{-1}(x)\right)(\bmod N)$ the order of which $p$ is an integer greater than or equal to 2.

9.  The encryption process of claim 8, wherein said order of the Chebyshev polynomial maps $p$ is a power of a pre-established integer base raised to an integer exponent, said integer exponent being the secret key.

10. The encryption process of claim 8, wherein images of recipient or sender chaotic maps are calculated by:

    a) factoring the order of the Chebyshev map obtaining a list of its prime factors and a list of their relative exponents;
    b) applying iteratively a Chebyshev map the order of which is the first value of said list of prime factors, for a number of times equal to the exponent thereof;
    c) repeating iteratively step b) in which the degree of the Chebyshev map are the remaining values of said list of prime factors;
    d) the result of the last iteration being said image to be calculated.

11. The public-key encryption process of claim 2, wherein

    a recipient of a message chooses a second function $p_R(.)$ as public key, the inverse of which $p_R^{-1}(.)$ being hard to compute and constituting his private key, so that the corresponding modified chaotic map $f\left(p_R\left(f^{-1}(.)\right)\right)(\mathrm{mod}\,N)$ belongs to said set of permutable chaotic maps;

a sender of a message encrypts an encoded message by calculating the image thereof through said chaotic map using the public key of the recipient of the message;

the recipient decrypts an encrypted message by using his private key $p_R^{-1}(.)$.

**12.** The public-key encryption process of claim 2, further comprising the step of choosing preliminarily an invertible parametric function $q_{\mathrm{par}}(.)$ defined almost everywhere on said phase space and an invertible second function $p_r(.)$ defined by an integer number $r$ so that the corresponding modified chaotic map $T_r(.)$ belongs to said set of permutable chaotic maps,

a recipient of a message carrying out the following steps:

choosing a first random number $x$ and a second random number r both belonging to said phase space, calculating the image of said first random number $x$ through a recipient chaotic map $T_r(x)$ the order of which is said second random number $r$, the set constituted by said first random number $x$, said image thereof $T_r(x)$ and said pre-established integer $N$ being the public-key of the recipient, said second random number $r$ being the corresponding private key;

a sender of a message carrying out the following steps:

encoding the message to be transmitted by said code, generating said first number $m$ as a non-negative integer smaller than said pre-established integer $N$,

choosing a third random integer $s$ smaller than said pre-established integer $N$ as sender private key,

calculating the image of said first random number $x$ t hrough a sender chaotic map $T_s(.)$ the order of which is said third random number $s$,

sending to the recipient a pair of values, the first value of said pair being said image through said sender map $T_s(x)$ while the second value being the image of said parametric function $q_{T_s(T_s(x))}(.)$ modulo said pre-established integer $N$ of said first number m, using as parameter the image through the sender chaotic map $T_s(.)$ of said image $T_r(x)$;

the recipient decrypting the message by:

calculating the image through said recipient map $T_r(.)$ of the first value of said pair $T_r(T_s(x))$,

obtaining said first number $m$ applying the inverse of said parametric function $q^{-1}_{T_r(T_s(x))}(.)$ modulo said pre-established integer N to the second value of said pair using as parameter the image through said recipient function $T_r(.)$ of the first value of said pair $T_r(T_s(x))$, and

recovering the original message by decoding said number with the pre-established code.

**13.** The public-key encryption process of claim 2, comprising the step of choosing preliminarily an invertible second function $p_e(.)$ defined by an integer number e so that the corresponding modified chaotic map $T_e(.)$ belongs to said set of permutable chaotic maps, wherein

a recipient of a message carries out the following steps:

choosing a pair of random distinct prime numbers first $p$ and second $q$,
choosing as said pre-established number $N$ the product of said pair of prime numbers $N=p{*}q$,
calculating an auxiliary number $\phi$ according to the following formula

$$\phi = \left(p^2 - 1\right)\left(q^2 - 1\right),$$

choosing a random integer $e$ greater than one and smaller than said auxiliary number $\phi$, and co-prime with said auxiliary number $\phi$;

calculating the recipient private key as the unique integer $d$ greater than one and smaller than said auxiliary number $\phi$ that satisfies the following formula

$$ed \equiv 1(\mathrm{mod}\,\phi)$$

the pair constituted by said pre-established number $N$ and said random integer $e$ being the recipient public key; a sender of a message carrying out the following steps:

encoding the message to be transmitted by said code, generating said first number $m$ as a non-negative integer smaller than said pre-established integer $N$,

sending to the recipient the image of said first number $m$ through a sender chaotic map $T_e(.)$ the order of which is said random integer $e$;

the recipient decrypting the message by:

obtaining said number $m$ by calculating the image through a recipient map $T_d(.)$ defined by said private key $d$ of the value sent by the sender,

recovering the original message by decoding said number m with the pre-established code.

**14.** The encryption process of claim 13, wherein the image of said parametric function $q_{\mathrm{par}}(.)$ is the product between the argument of the function by the parameter thereof.

**15.** The encryption process of claim 13, wherein the image of said parametric function $q_{\mathrm{par}}(.)$ is the ratio between the argument of the function by the parameter thereof.

**16.** The encryption process of claim 13, wherein the image of said parametric function $q_{par}(.)$ is the sum between the argument of the function and the parameter thereof.

**17.** Use of the encryption process of claim 1 in a digital signature process, wherein a sender carries out the following operations:

encrypting a digital signature by calculating the image thereof through said modified chaotic map $f\left(p_S^{-1}\left(f^{-1}(.)\right)\right)(\mathrm{mod}\,N)$ using his own private key $p_S^{-1}(.)$,

encrypting a message together with the encrypted digital signature appended thereto, by calculating the image of the combination of the message and the encrypted digital signature through said modified chaotic map $f\left(p_R\left(f^{-1}(.)\right)\right)(\mathrm{mod}\,N)$ using a recipient public-key $p_R(.)$;

a recipient carries out the following operations:

decrypting the received encrypted message by calculating the image thereof through said modified chaotic map $f\left(p_R^{-1}\left(f^{-1}(.)\right)\right)(\mathrm{mod}\,N)$ us ing his own private key $p_R^{-1}(.)$, and

obtaining the digital signature by decrypting the just decrypted message by calculating the image thereof through said modified chaotic map $f\left(p_S\left(f^{-1}(.)\right)\right)(\mathrm{mod}\,N)$ using the sender public key $p_S(.)$.

**18.** The use of the encryption process of claim 1 according to claim 17, wherein said digital signature is the message to be sent.

**19.** A computer program loadable in an internal memory of a computer, comprising a software code for executing the process steps of any of claims from 1 to 18 when said program is run on a computer.

**Patentansprüche**

**1.** Verschlüsselungsprozess, der die folgenden Schritte umfasst: vorheriges Wählen wenigstens eines geheimen Schlüssels und einer Menge permutierbarer Funktionen, die in einem bestimmten Phasenraum zum Verschlüsseln/ Entschlüsseln von Nachrichten definiert sind, Wählen eines Codes zum Codieren einer zu sendenden Nachricht in Form einer zu dem Phasenraum gehörenden Zahl $m$, Verschlüsseln der Nachricht durch Anwenden einer der permutierbaren Funktionen auf die Zahl $m$, wobei die Menge permutierbarer Funktionen aus modifizierten chaotischen Abbildungen $f(p(f^1(.)))(\mathrm{mod}\ N)$, die durch eine zusammengesetzte Funktion erzeugt werden, deren Bild modulo einer bestimmten im Voraus gesetzten ganzen Zahl N berechnet wird, aufgebaut sind und durch Zusammensetzen einer ersten Funktion $f(.)$, einer zweiten Funktion $p(.)$ und der Inversen der ersten Funktion $f^1(.)$ erhalten werden, wobei der Geheimschlüssel durch die zweite Funktion $p(.)$ definiert ist.

2. Verschlüsselungsprozess nach Anspruch 1, der ferner die Definition eines öffentlichen Schlüssels zum Verschlüsseln von zu sendenden Nachrichten umfasst.

3. Verschlüsselungsprozess nach Anspruch 1, bei dem die modifizierten chaotischen Abbildungen zu jeweiligen Torus-Automorphismen äquivalent sind, die als modulare iterative Vektorabbildungen definiert sind, in denen nach einer bestimmten Anzahl von Iterationsschritten ein ganzzahliger Wert eines Zustandsvektors erhalten wird durch:

   Berechnen des Skalarprodukts zwischen dem Wert des Zustandsvektors des vorhergehenden Schrittes und einer bestimmten Matrix, deren Determinante $\pm 1$ ist; und
   Berechnen des ganzzahligen Rests des Skalarprodukts modulo der bestimmten im Voraus gesetzten ganzen Zahl.

4. Verschlüsselungsprozess nach Anspruch 3, bei dem die Komponenten irgendeines Raumvektors im Intervall [0,1] enthalten sind, die im Voraus gesetzte ganze Zahl 1 ist und die bestimmte Matrix eine beliebige $2 \times 2$-Matrix mit ganzzahligen Komponenten ist.

5. Verschlüsselungsprozess nach Anspruch 3, bei der die Komponenten irgendeines Raumvektors nicht negative ganze Zahlen kleiner als die im Voraus gesetzte ganze Zahl sind.

6. Verschlüsselungsprozess nach Anspruch 3, bei dem die im Voraus gesetzte ganze Zahl eine Primzahl ist und die bestimmte Matrix eine beliebige $2 \times 2$-Matrix mit ganzzahligen Komponenten ist.

7. Verschlüsselungsprozess nach Anspruch 4, bei dem die Komponente der ersten Zeile eines anfänglichen Zustandsvektors der modularen iterativen Vektorabbildung 1 ist und die jeweilige Komponente der zweiten Zeile eine Zahl ist, die im Intervall [0,1] enthalten ist.

8. Verschlüsselungsprozess nach Anspruch 3, bei dem die chaotischen Abbildungen modifizierte Tschebyscheff-Polynom-Abbildungen $\cosh(p \cdot \cosh^{-1}(x))(\mathrm{mod}\ N)$ sind, deren Ordnung $p$ eine ganze Zahl größer oder gleich 2 ist.

9. Verschlüsselungsprozess nach Anspruch 8, bei dem die Ordnung $p$ der Tschebyscheff-Polynom-Abbildungen eine Potenz einer im Voraus gesetzten ganzzahligen Basis ist, die zu einem ganzzahligen Exponenten erhoben ist, wobei der ganzzahlige Exponent der geheime Schlüssel ist.

10. Verschlüsselungsprozess nach Anspruch 8, bei dem Bilder von chaotischen Empfänger- oder Senderabbildungen berechnet werden durch:

    a) Zerlegen der Ordnung der Tschebyscheff-Abbildung in Faktoren, wobei eine Liste ihrer Primfaktoren und eine Liste ihrer relativen Exponenten erhalten wird;
    b) iteratives Anwenden einer Tschebyscheff-Abbildung, deren Ordnung der erste Wert der Liste von Primfaktoren ist, in einer Anzahl, die gleich ihrem Exponenten ist;
    c) iteratives Wiederholen des Schrittes b), wobei der jeweilige Grad der Tschebyscheff-Abbildung durch die verbleibenden Werte der Liste von Primfaktoren gegeben ist;
    d) wobei das Ergebnis der letzten Iteration das zu berechnende Bild ist.

11. Prozess zum Verschlüsseln mit einem öffentlichen Schlüssel nach Anspruch 2, bei dem
    ein Empfänger einer Nachricht eine zweite Funktion $p_R(.)$ als öffentlichen Schlüssel wählt, deren Inverse $p_R^{-1}(.)$ schwer zu berechnen ist und seinen privaten Schlüssel bildet, so dass die entsprechende modifizierte chaotische Abbildung $f(p_R(f^1(.)))(\mathrm{mod}\ N)$ zu der Menge permutierbarer chaotischer Abbildungen gehört;
    ein Sender einer Nachricht eine codierte Nachricht **dadurch** verschlüsselt, dass er ihr Bild durch die chaotische Abbildung unter Verwendung des öffentlichen Schlüssels des Empfängers der Nachricht berechnet;
der Empfänger eine verschlüsselte Nachricht unter Verwendung seines privaten Schlüssels $p_R^{-1}(.)$ entschlüsselt.

**12.** Prozess zum Verschlüsseln mit einem öffentlichen Schlüssel nach Anspruch 2, der ferner den Schritt des vorherigen Wählens einer invertierbaren parametrischen Funktion $q_{par}(.)$, die fast überall in dem Phasenraum definiert ist, und einer invertierbaren zweiten Funktion $p_r(.)$, die durch eine ganze Zahl $r$ definiert ist, umfasst, so dass die entsprechende modifizierte chaotische Abbildung $T_r(.)$ zu der Menge permutierbarer chaotischer Abbildungen gehört, wobei ein Empfänger einer Nachricht die folgenden Schritte ausführt:

Wählen einer ersten Zufallszahl $x$ und einer zweiten Zufallszahl $r$, die beide zu dem Phasenraum gehören, Berechnen des Bildes der ersten Zufallszahl $x$ durch eine chaotische Abbildung $T_r(x)$ des Empfängers, deren Ordnung die zweite Zufallszahl $r$ ist, wobei die Menge, die durch die erste Zufallszahl $x$, deren Bild $T_r(x)$ und die im Voraus gesetzte ganze Zahl $N$ gebildet ist, der öffentliche Schlüssel des Empfängers ist, während die zweite Zufallszahl $r$ der entsprechende private Schlüssel ist;

wobei ein Sender einer Nachricht die folgenden Schritte ausführt:

Codieren der zu sendenden Nachricht durch den Code, Erzeugen der ersten Zahl $m$ als eine nicht negative ganze Zahl, die kleiner als die im Voraus gesetzte ganze Zahl $N$ ist,
Wählen einer dritten ganzen Zufallszahl $s$, die kleiner als die im Voraus gesetzte ganze Zahl $N$ ist, als privaten Schlüssel des Senders,
Berechnen des Bildes der ersten Zufallszahl $x$ durch eine chaotische Abbildung $T_s(.)$ des Senders, deren Ordnung die dritte Zufallszahl $s$ ist,
Senden eines Wertepaares zu dem Empfänger, wobei der erste Wert des Paars das Bild der Senderabbildung $T_s(x)$ ist, während der zweite Wert das Bild der parametrischen Funktion $q_{Ts(Tr(x))}(.)$ modulo der im Voraus gesetzten ganzen Zahl $N$ der ersten Zahl $m$ ist, das unter Verwendung des Bildes der chaotischen Senderabbildung $T_s(.)$ des Bildes $T_r(x)$ als Parameter erhalten wird;

wobei der Empfänger die Nachricht entschlüsselt durch:

Berechnen des Bildes durch die Empfängerabbildung $T_r(.)$ des ersten Wertes des Paars $T_r(T_s(x))$,
Erhalten der ersten Zahl m durch Anwenden der inversen parametrischen Funktion $q_{Tr(Ts(x))}^{-1}(.)$ modulo der im Voraus gesetzten ganzen Zahl $N$ auf den zweiten Wert des Paars unter Verwendung des durch die Empfängerfunktion $T_r(.)$ erhaltenen Bildes des ersten Wertes des Paars $T_r(T_s(x))$ als Parameter und
Wiederherstellen der ursprünglichen Nachricht durch Decodieren der Zahl mit dem im Voraus gesetzten Code.

**13.** Prozess zum Verschlüsseln mit einem öffentlichen Schlüssel nach Anspruch 2, das den Schritt des vorherigen Wählens einer invertierbaren zweiten Funktion $p_e(.)$ umfasst, die durch eine ganze Zahl $e$ definiert ist, so dass die entsprechende modifizierte chaotische Abbildung $T_e(.)$ zu der Menge permutierbarer chaotischer Abbildungen gehört, wobei
ein Empfänger einer Nachricht die folgenden Schritte ausführt:

Wählen eines Paars unterschiedlicher zufälliger Primzahlen, als Erstes $p$ und als Zweites $q$,
Wählen des Produkts des Paars von Primzahlen $N = p*q$ als die im Voraus gesetzte Zahl $N$,
Berechnen einer Hilfszahl $\phi$ gemäß der folgenden Formel:

$$\phi = (p^2 - 1)(q^2 - 1),$$

Wählen einer Zufallszahl $e$ größer als eins und kleiner als die Hilfszahl $\phi$, die eine Co-Primzahl der Hilfszahl $\phi$ ist;
Berechnen des privaten Schlüssels des Empfängers als die eindeutige ganze Zahl $d$ größer als eins und kleiner als die Hilfszahl $\phi$, die die folgende Beziehung erfüllt:

$$ed \equiv 1 (\mathrm{mod}\ \phi),$$

wobei das Paar, das durch die im Voraus gesetzte Zahl $N$ und durch die ganze Zufallszahl $e$ gebildet ist, der öffentliche Schlüssel des Empfängers ist;
wobei ein Sender einer Nachricht die folgenden Schritte ausführt:

Codieren der zu übertragenden Nachricht durch den Code, Erzeugen der ersten Zahl $m$ als eine nicht negative ganze Zahl kleiner als die im Voraus gesetzte ganze Zahl $N$,
Senden des Bildes der ersten Zahl $m$ durch eine chaotische Abbildung $T_e$(.) des Senders, deren Ordnung die zufällige ganze Zahl $e$ ist, zu dem Empfänger;

wobei der Empfänger die Nachricht entschlüsselt durch:

Erhalten der Zahl $m$ durch Berechnen des Bildes durch eine Empfängerabbildung $T_d$(.), die durch den privaten Schlüssel $d$ des durch den Sender gesendeten Wertes definiert ist,
Wiederherstellen der ursprünglichen Nachricht durch Decodieren der Zahl $m$ mit dem im Voraus erstellten Code.

14. Verschlüsselungsprozess nach Anspruch 13, bei dem das Bild der parametrischen Funktion $q_{par}$(.) das Produkt zwischen dem Argument der Funktion und ihrem Parameter ist.

15. Verschlüsselungsprozess nach Anspruch 13, bei dem das Bild der parametrischen Funktion $q_{par}$(.) das Verhältnis zwischen dem Argument der Funktion und ihrem Parameter ist.

16. Verschlüsselungsprozess nach Anspruch 13, bei dem das Bild der parametrischen Funktion $q_{par}$(.) die Summe zwischen dem Argument der Funktion und ihrem Parameter ist.

17. Verwendung des Verschlüsselungsprozesses nach Anspruch 1 in einem digitalen Signaturprozess, bei der:

ein Sender die folgenden Operationen ausführt:

Verschlüsseln einer digitalen Signatur durch Berechnen ihres Bildes durch die modifizierte chaotische Abbildung $f(p_S^{-1}(f^{-1}(.)))(\mathrm{mod}\ N)$ unter Verwendung seines eigenen privaten Schlüssels $p_S^{-1}$(.),
Verschlüsseln einer Nachricht zusammen mit der an sie angehängten verschlüsselten digitalen Signatur durch Berechnen des Bildes der Kombination der Nachricht und der verschlüsselten digitalen Signatur durch die modifizierte chaotische Abbildung $f(p_R(f^{-1}(.)))(\mathrm{mod}\ N)$ unter Verwendung eines öffentlichen Schlüssels $p_R$(.) des Empfängers;

wobei ein Empfänger die folgenden Operationen ausführt:

Entschlüsseln der empfangenen verschlüsselten Nachricht durch Berechnen ihres Bildes durch die modifizierte chaotische Abbildung $f(p_R^{-1}(f^{-1}(.)))(\mathrm{mod}\ N)$ unter Verwendung seines eigenen privaten Schlüssels $p_R^{-1}$(.) und Erhalten der digitalen Signatur durch Entschlüsseln der eben entschlüsselten Nachricht durch Berechnen des Bildes der modifizierten chaotischen Abbildung $f(p_S(f^{-1}(.)))(\mathrm{mod}\ N)$ unter Verwendung des öffentlichen Schlüssels $p_S$(.) des Senders.

18. Verwendung des Verschlüsselungsprozesses von Anspruch 1 nach Anspruch 17, bei der die digitale Signatur die zu sendende Nachricht ist.

19. Computerprogramm, das in einen internen Speicher eines Computers geladen werden kann und Software-Code enthält, um die Prozessschritte nach einem der Ansprüche 1 bis 18 auszuführen, wenn das Programm auf einem Computer läuft.

## Revendications

1. Procédé de cryptage comprenant les étapes consistant à choisir de façon préliminaire au moins une clé secrète et un ensemble de fonctions permutables définies sur un certain espace de phase pour crypter/décrypter des messages, choisir un code pour coder un message à envoyer sous forme d'un nombre m appartenant à l'espace de phase, crypter le message en appliquant l'une des fonctions permutables au nombre m, l'ensemble de fonctions permutables étant constitué de cartes chaotiques modifiées $f(p(f^{-1}(.)))(\mathrm{mod}N)$, produites par une fonction composite dont l'image est calculée modulo un certain nombre entier prédéterminé N obtenu en composant une première fonction f(.), une seconde fonction p(.) et l'inverse de la première fonction f⁻¹(.), la clé secrète étant définie par la seconde fonction p(.).

2. Procédé de cryptage selon la revendication 1, comprenant en outre la définition d'une clé publique pour crypter les messages à envoyer.

3. Procédé de cryptage selon la revendication 1, dans lequel les cartes chaotiques modifiées sont équivalentes à des automorphismes toriques définis en tant que cartes vectorielles itératives modulaires, dans lequel la valeur entière d'un vecteur d'état après un certain nombre d'étapes d'itération est obtenu en :

> calculant le produit scalaire de la valeur du vecteur d'état à l'étape précédente et d'une certaine matrice dont le déterminant est égal à $\pm$ 1 ; et
> calculant le reste entier du produit scalaire modulo le certain nombre entier prédéterminé.

4. Procédé de cryptage selon la revendication 3, dans lequel les composantes d'un vecteur spatial sont comprises dans l'intervalle [0, 1], l'entier prédéterminé est égal à 1, et ladite certaine matrice est une matrice 2x2 arbitraire à composantes entières.

5. Procédé de cryptage selon la revendication 3, dans lequel les composantes d'un vecteur spatial sont des nombres entiers non négatifs inférieurs à l'entier prédéterminé.

6. Procédé de cryptage selon la revendication 3, dans lequel l'entier prédéterminé est un nombre premier et ladite matrice est une matrice arbitraire 2x2 à composantes entières.

7. Procédé de cryptage selon la revendication 4, dans lequel la composante de la première rangée du vecteur d'état initial de la carte vectorielle itérative modulaire est égal à 1, et la composante respective de la seconde rangée est un nombre compris dans l'intervalle [0, 1].

8. Procédé de cryptage selon la revendication 3, dans lequel les cartes chaotiques sont des cartes de polynômes de Chebyshev modifiés $\cosh(p.\cosh^{-1}(x))(\mathrm{mod}N)$ dont l'ordre p est un entier supérieur ou égal à 2.

9. Procédé de cryptage selon la revendication 8, dans lequel l'ordre des cartes de polynômes de Chebyshev p est une puissance d'une base entière prédéterminée élevée à un exposant entier, l'exposant entier étant la clé secrète.

10. Procédé de cryptage selon la revendication 8, dans lequel les images des cartes chaotiques du récepteur ou de l'émetteur sont calculées en :

> a) mettant en facteur l'ordre de la carte de Chebyshev fournissant une liste de ses facteurs premiers et une liste de leurs exposants relatifs ;
> b) appliquant itérativement une carte de Chebyshev dont l'ordre est la première valeur de la liste de facteurs premiers, un nombre de fois égal à son exposant ;
> c) répétant itérativement l'étape b), le degré de la carte de Chebyshev étant les valeurs restantes de la liste de facteurs premiers ; et
> d) le résultat de la dernière itération étant l'image à calculer.

11. Procédé de cryptage à clé publique selon la revendication 2, dans lequel :

> un récepteur de message choisit une seconde fonction $p_R(.)$ en tant que clé publique dont l'inverse $p_R^{-1}(.)$ est difficile à calculer et constitue sa clé privée, de sorte que la carte chaotique modifiée $f(p_R(f^{-1}(.)))(\mathrm{mod}N)$ correspondante appartient à l'ensemble de cartes chaotiques permutables ;
> un émetteur de message crypte un message codé en calculant son image par l'intermédiaire de la carte chaotique en utilisant la clé publique du récepteur du message ;
>
> le récepteur décrypte un message crypté en utilisant sa clé privée $p_R^{-1}(.)$.

12. Procédé de cryptage à clé publique selon la revendication 2, comprenant l'étape consistant à choisir de façon préliminaire une fonction paramétrique inversable $q_{par}(.)$ définie presque partout dans l'espace des phases et une

seconde fonction inversable $p_r$ (.) définie par un nombre entier r de sorte que la carte chaotique modifiée correspondante $T_r$(.) appartient à l'ensemble de cartes chaotiques permutables ;
un récepteur de message mettant en oeuvre les étapes suivantes :

choisir un premier nombre aléatoire x et un second nombre aléatoire r appartenant tous deux à l'espace des phases ;
calculer l'image du premier nombre aléatoire x par l'intermédiaire d'une carte chaotique réceptrice $T_r(x)$ dont l'ordre est le second nombre aléatoire r, l'ensemble constitué par le premier nombre aléatoire x, son image $T_r$(x) et l'entier prédéterminé N étant la clé publique du récepteur, le second nombre aléatoire r étant la clé privée correspondante ;

un émetteur de message mettant en oeuvre les étapes suivantes :

coder le message à émettre par ledit code, pour produire le premier nombre m en tant qu'entier non négatif inférieur à l'entier prédéterminé N,
choisir un troisième entier aléatoire s inférieur à l'entier prédéterminé N en tant que clé privée d'émetteur,
calculer l'image du premier nombre aléatoire x par l'intermédiaire d'une carte chaotique d'émetteur $T_s$(.) dont l'ordre est le troisième nombre aléatoire s,
envoyer au récepteur deux valeurs, la première des deux valeurs étant l'image par l'intermédiaire de la carte d'émetteur $T_S(x)$ tandis que la seconde valeur est l'image de la fonction paramétrique $q_{T_s(T_r(x))}$(.) modulo le premier entier prédéterminé N du premier nombre m, en utilisant en tant que paramètre l'image par l'intermédiaire de la carte chaotique $T_s$(.) de l'émetteur de l'image $T_r(x)$ ;

le récepteur décryptant le message en :

calculant l'image par l'intermédiaire de la carte de récepteur $T_r$(.) de la première valeur des deux valeurs $T_r(T_s(x))$,

obtenant le premier nombre m en appliquant l'inverse de la fonction paramétrique $q^{-1}_{T_r(T_s(x))}(\cdot)$ modulo l'entier prédéterminé N à la seconde des deux valeurs en utilisant comme paramètre l'image par l'intermédiaire de la fonction de récepteur $T_r$(.) de la première des deux valeurs $T_r(T_s(x))$, et
récupérant le message initial en décodant ledit nombre par le code prédéterminé.

13. Procédé de cryptage à clé publique selon la revendication 2, comprenant l'étape consistant à choisir de façon préliminaire une seconde fonction inversable $p_e$(.) définie par un nombre entier e de sorte que la carte chaotique modifiée $T_e$(.) appartient à l'ensemble de cartes chaotiques permutables, dans lequel :

un récepteur de message met en oeuvre les étapes suivantes :

choisir des premier p et second q nombres premiers distincts,
choisir en tant que nombre prédéterminé N le produit des deux nombres premiers N=p*q,
calculer un nombre auxiliaire $\phi$ selon la formule suivante :

$$\phi = (p^2 - 1)(q^2 - 1)$$

choisir un entier aléatoire e supérieur à un et inférieur au nombre auxiliaire $\phi$ et co-premier avec le nombre auxiliaire $\phi$,
calculer la clé privée du récepteur en tant que l'entier unique d supérieur à un et inférieur au nombre auxiliaire $\phi$ qui satisfait la formule suivante :

$$ed \equiv 1 \pmod{\phi}$$

la paire constituée par le nombre prédéterminé N et l'entier aléatoire e étant la clé publique du récepteur ;

un émetteur de message met en oeuvre les étapes suivantes :

coder le message à émettre par ledit code, pour produire le premier nombre m en tant qu'entier non négatif inférieur à l'entier prédéterminé N ;

envoyer au récepteur l'image du premier nombre m par l'intermédiaire d'une carte chaotique d'émetteur $T_e$(.) dont l'ordre est un entier aléatoire e ;

le récepteur décryptant le message en :

obtenant le nombre m en calculant l'image par l'intermédiaire d'une carte de récepteur $T_d$(.) définie par la clé privée d de la valeur envoyée par l'émetteur ;

récupérer le message d'origine en décodant le nombre m par le code prédéterminé.

**14.** Procédé de cryptage selon la revendication 13, dans lequel l'image de la fonction paramétrique $q_{par}$(.) est le produit entre l'argument de la fonction et le paramètre de celle-ci.

**15.** Procédé de cryptage selon la revendication 13, dans lequel l'image de la fonction paramétrique $q_{par}$(.) est le rapport entre l'argument de la fonction et le paramètre de celle-ci.

**16.** Procédé de cryptage selon la revendication 13, dans lequel l'image de la fonction paramétrique $q_{par}$(.) est la somme entre l'argument de la fonction et le paramètre de celle-ci.

**17.** Utilisation du procédé de cryptage selon la revendication 1 dans un processus de signature numérique, dans lequel :

un émetteur effectue les opérations suivantes :

crypter une signature numérique en calculant son image par l'intermédiaire de la carte chaotique modifiée $f(p_s^{-1}(f^{-1}(.)))(\mathrm{mod}N)$ en utilisant sa propre clé privée $p_s^{-1}(.)$ ;

crypter un message avec la signature numérique cryptée liée, en calculant l'image de la combinaison du message et de la signature numérique cryptée par la carte chaotique modifiée $f(p_R(f^{-1}(.)))(\mathrm{mod}N)$ en utilisant une clé publique de récepteur PR(.) ;

un récepteur met en oeuvre les opérations suivantes :

décrypter le message crypté reçu en calculant son image par l'intermédiaire de la carte chaotique modifiée $f(p_R^{-1}(f^{-1}(.)))(\mathrm{mod}N)$ en utilisant sa propre clé privée $p_R^{-1}(.)$ ;

obtenir la signature numérique en décryptant le message qui vient d'être décrypté en calculant son image par l'intermédiaire de la carte chaotique modifiée $f(p_s(f^{-1}(.)))(\mathrm{mod}\ N)$ en utilisant la clé publique de l'émetteur $P_s$(.).

**18.** Utilisation du procédé de cryptage de la revendication 1 selon la revendication 17, dans lequel la signature numérique est le message à envoyer.

**19.** Programme d'ordinateur chargeable dans une mémoire interne d'un ordinateur comprenant un code logiciel pour exécuter les étapes de traitement de l'une quelconque des revendications 1 à 18 quand le programme est amené à tourner sur un ordinateur.